Europäisches Patentamt

European Patent Office

Office européen des brevets

(11) Publication number: **0 297 776 B1**

# EUROPEAN PATENT SPECIFICATION

(45) Date of publication of patent specification: **04.08.93**　(51) Int. Cl.⁵: **H01F 10/00, G11B 5/147**

(21) Application number: **88305703.6**

(22) Date of filing: **22.06.88**

(54) **Soft magnetic thin films.**

(30) Priority: **30.06.87 JP 163593/87**
**30.06.87 JP 163594/87**

(43) Date of publication of application:
**04.01.89 Bulletin 89/01**

(45) Publication of the grant of the patent:
**04.08.93 Bulletin 93/31**

(84) Designated Contracting States:
**DE FR GB**

(56) References cited:
EP-A- 0 147 126　　EP-A- 0 206 658
EP-A- 0 234 879　　US-A- 4 195 323
US-A- 4 246 620　　US-A- 4 422 117

(73) Proprietor: **SONY CORPORATION**
**7-35 Kitashinagawa 6-chome Shinagawa-ku Tokyo 141(JP)**

(72) Inventor: **Hayashi, Kazuhiko Patents Division Sony Corporation 6-7-35 Kitashinagawa Shinagawa-ku Tokyo 141(JP)**
Inventor: **Hayakawa, Masatoshi Patents Division Sony Corporation 6-7-35 Kitashinagawa Shinagawa-ku Tokyo 141(JP)**
Inventor: **Katori, Kenji Patents Division Sony Corporation 6-7-35 Kitashinagawa Shinagawa-ku Tokyo 141(JP)**
Inventor: **Aso, Koichi Patents Division Sony Corporation 6-7-35 Kitashinagawa Shinagawa-ku Tokyo 141(JP)**

(74) Representative: **Thomas, Christopher Hugo et al D Young & Co 10 Staple Inn London WC1V 7RD (GB)**

Rank Xerox (UK) Business Services
(3.10/3.6/3.3.1)

## Description

This invention relates to soft magnetic thin films. Such films are particularly, but not exclusively, suitable for use as the core of a magnetic head for high density recording, and the invention also relates to such magnetic heads.

In magnetic recording/reproducing apparatus such as an audio tape recorder or video tape recorder, the tendency is towards a higher signal recording density and a higher recording quality, and a so-called metal tape using ferromagnetic metal powders such as iron powders, and a so-called evaporated tape in which the ferromagnetic metal materials are directly deposited on a base film by physical vapour deposition, are being put to practical usage.

To effect optimum recording and reproduction with full utilization of the properties of a magnetic recording medium having a high coercive force, it is necessary that the core material have a high saturation magnetic flux density and a low coercive force.

As a soft magnetic material satisfying such demands, various materials have been evolved and used as a sole layer or as a laminated layer.

Fe-Co base alloy is one of the above materials, and Si or other elements have been added to improve the soft magnetic properties as disclosed in EP-A-0234879.

According to the invention there is provided a soft magnetic thin film having a multilayered structure of alternately superposed first and second magnetic thin films, wherein the first magnetic thin film has a face centered cubic structure and has a composition represented by the formula:

$$Fe_aCo_bNi_cM_d$$

wherein a, b, c and d represent the atomic percentages of the elements and

$20 \leq a \leq 40$
$15 \leq b \leq 55$
$20 \leq c \leq 55$
$0 \leq d \leq 5$
$a + b + c + d = 100$

and M is at least one element selected from the group consisting of Ti, Zr, V, Nb, Ta, Cr, Mo, W, B, C, Si, Al, Ge, Ga and the second magnetic thin film has a body centered cubic structure.

Embodiments of the soft magnetic thin film can have a sufficiently low coercive force after sputtering for the soft magnetic properties not to be impaired in the course of subsequent heat processing, such as glass melting, when it is used as a single layer film for a magnetic head or the like.

When such a soft magnetic thin film is used as a first soft magnetic thin film layer and is laminated with a second soft magnetic thin film layer, the soft magnetic properties can be further improved.

When such a soft magnetic thin film is used for a magnetic head, magnetization of the magnetic head is prevented and optimum recording and reproduction with low distortion and a high signal-to-noise ratio may be realized.

The invention will now be described by way of example with reference to the accompanying drawings, in which:

Figure 1 is a ternary system diagram showing the composition range of an FeCoNi alloy according to the present invention;

Figure 2 is a ternary system diagram showing coercive force measuring points of a single layer film and a laminated film;

Figures 3(A) and 3(B) are characteristic diagrams showing hysteresis curves for a single layer Fe30Co40Ni30 thin film and of such a film laminated with an Fe86Si14 thin film;

Figures 4(A) and 4(B) are characteristic diagrams showing the film thickness dependency of the mean particle size and the coercive force in a laminated film of Fe30Co40Ni30 and Fe86Si14, Figure 4(A) corresponding to the characteristics after sputtering, and Figure 4(B) to those after annealing;

Figure 5 is a characteristic diagram showing the film thickness dependency of the coercive force of a laminated film of Fe30Co25Ni45 and Fe86Si14;

Figure 6 is a characteristic diagram showing the film thickness dependency of the coercive force of a laminated film of Fe30Co35Ni35 and Fe;

Figure 7 is a characteristic diagram showing the film thickness dependency of the coercive force of a laminated film of Fe30Co35Ni35 and Fe58Co40Dy2;

Figures 8(A) and 8(B) are characteristic diagrams showing hysteresis curves of laminated films of FeCoNi admixed with B or Ti, and Fe86Si14; and

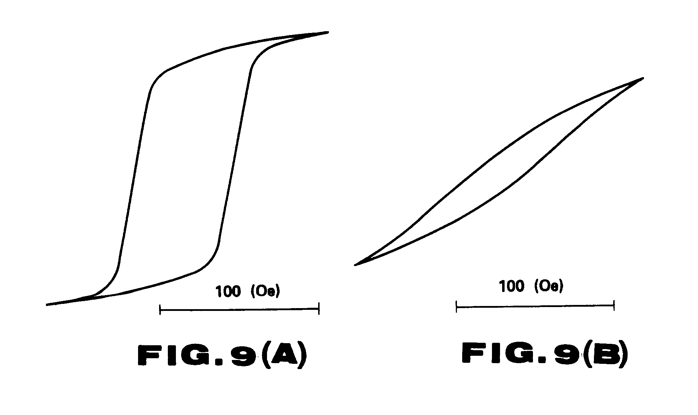

Figure 9(A) and (B) are characteristic diagrams showing hysteresis curves for Fe60Co40 thin film after sputtering and after annealing.

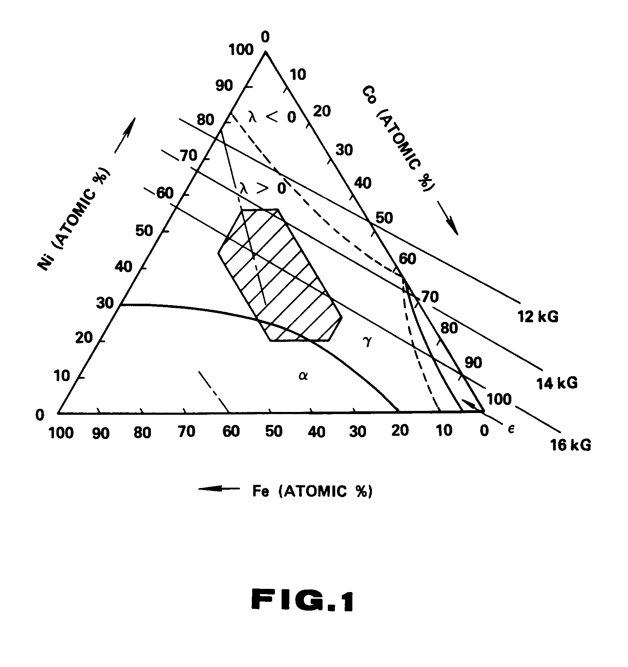

Figure 1 shows a ternary system diagram for the compositional range of an FeCoNi base alloy comprising 20 to 40 atomic % Fe, 15 to 55 atomic % Co, and 20 to 55 atomic % Ni, to be used for a soft magnetic thin film. This alloy assumes an $\alpha$-phase (body-centred cubic crystal), a $\gamma$-phase (face-centred cubic crystal) or an $\epsilon$-phase (hexagonal phase), with the solid line in the drawing as the boundary, depending upon the amounts of the respective elements. The dotted line in the drawing indicates the zero-magnetostriction curve, and the chain dotted line the zero crystal magnetoanisotropic curve. The above composition range corresponds to the hatched line area in the drawing and substantially assumes the face-centred cubic structure and a positive magnetostriction constant. It is an area for which high saturation magnetic flux density is expected.

The above composition range is specified from the standpoint of the soft magnetic properties, and these deteriorate outside this composition range.

For improving corrosion and wear-resistance, the above soft magnetic thin films may be admixed with up to 5 atomic % of at least one of Ti, Zr, V, Nb, Ta, Cr, Mo, W, B, C, Si, Al, Ge and Ga as a fourth element.

The composition of the FeCoNi-base soft magnetic thin film including a fourth element is shown by the formula FeaCobNicMd, wherein a, b, c and d denote the compositional ratio in atomic % and M denotes the fourth element. The compositional range should satisfy the conditions $20<a<40$, $15<b<55$, $20<c<55$, $0<d<5$ and $a+b+c+d=100$.

The magnetic properties can be improved further by laminating the above soft magnetic thin films as a first soft magnetic thin film layer with a second soft magnetic soft film layer.

The single-layer film of FeCoNi soft magnetic thin film mainly has a face-centred structure. It has been confirmed experimentally that more satisfactory properties may be obtained by laminating the layer with a magnetic thin film having a body-centred structure such as Fe, FeSi alloy, FeCoDy alloy, FeSiAl alloy, FeGaSi alloy, FeGaGe alloy or FeAlGe.

It has also been found that more satisfactory properties may be obtained by laminating the layer with a magnetic thin film having a face-centred structure such as FeNi alloy or FeCoNi alloy. The lamination of thin films having different crystal structures prevents diffusion between the layers and maintains a clear boundary after passing through subsequent manufacturing steps. The film thickness and the number of laminated layers may be suitably selected in accordance with the desired magnetic properties.

These soft magnetic thin films can usually be produced by sputtering, for which various systems such as high frequency magnetron sputtering, DC sputtering, counter target sputtering or ion beam sputtering may be employed under the usual conditions. When adding the above fourth element, an alloy of the additional element and the FeCoNi alloy or the FeCoDy alloy may be used as a target, or sputtering may be performed with a chip of the additional element placed on a target consisting of the FeCoNi alloy or the FeCoDy alloy.

A preferred embodiment of the present invention will now be explained by referring to the accompanying drawings.

Example

The relation between the composition of an FeCoNi thin film and the coercive force when using the FeCoNi thin film as a single-layer film or as a laminated film with an FeSi thin film will be considered.

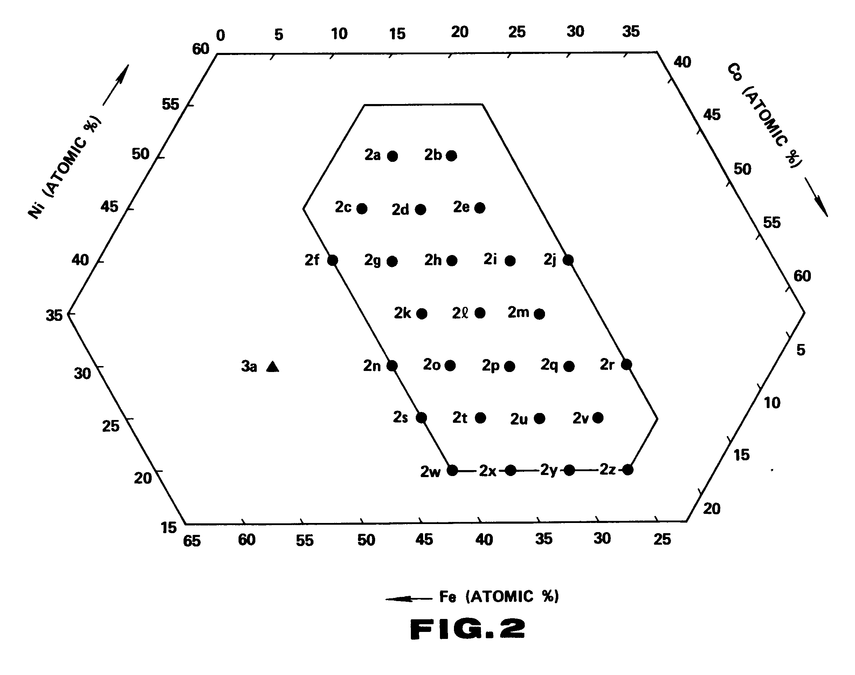

FeCoNi alloys have compositions in the range of 20 to 40 atomic %Fe, 20 to 55 atomic % Co, and 20 to 50 atomic % Ni. A single-layer film with a film thickness of 1.8$\mu$m was formed using the FeCoNi alloy as the target, and the coercive force was measured. These single-layer films were used as the first soft magnetic thin films and were alternately laminated with second soft magnetic thin film layer shaving the high saturation magnetic flux density and the composition of Fe86Si14, the suffices indicating the composition in atomic %, so that the total film thickness was 1.8 $\mu$m and the number of layers for the two films was 180. The coercive force of the laminated film was measured. The results are shown in Figure 2 and Table 1.

3

EP 0 297 776 B1

Table 1

| Point | Composition of single-layer film (atomic %) | | | coercive force of single-layer film | coercive force of laminated film |
|---|---|---|---|---|---|
| | Fe | Co | Ni | | |
| 2a | 30 | 20 | 50 | 0.37 | 0.17 |
| 2b | 25 | 25 | 50 | 0.32 | 0.18 |
| 2c | 35 | 20 | 45 | 0.37 | 0.51 |
| 2d | 30 | 25 | 45 | 0.40 | 0.57 |
| 2e | 25 | 30 | 45 | 0.42 | 0.20 |
| 2f | 40 | 20 | 40 | 0.52 | 0.25 |
| 2g | 35 | 25 | 40 | 0.41 | 0.17 |
| 2h | 30 | 30 | 40 | 0.42 | 0.19 |
| 2i | 25 | 35 | 40 | 0.49 | 0.23 |
| 2j | 20 | 40 | 40 | 0.50 | 0.22 |
| 2k | 35 | 30 | 35 | 0.52 | 0.14 |
| 2l | 30 | 35 | 35 | 0.41 | 0.19 |
| 2m | 25 | 40 | 35 | 0.51 | 0.20 |
| 2n | 40 | 30 | 30 | 6.5 | 0.64 |
| 2o | 35 | 35 | 30 | 0.41 | 0.18 |
| 2p | 30 | 40 | 30 | 0.42 | 0.16 |
| 2q | 25 | 45 | 30 | 0.56 | 0.20 |
| 2r | 20 | 50 | 30 | 0.83 | 0.44 |
| 2s | 40 | 35 | 25 | 3.81 | 0.91 |
| 2t | 35 | 40 | 25 | 3.22 | 0.88 |
| 2u | 30 | 45 | 25 | 0.58 | 0.22 |
| 2v | 25 | 50 | 25 | 0.70 | 0.28 |
| 2w | 40 | 40 | 20 | 4.21 | 1.80 |
| 2x | 35 | 45 | 20 | 2.38 | 0.92 |
| 2y | 30 | 50 | 20 | 1.78 | 0.70 |
| 2z | 25 | 55 | 20 | 1.63 | 0.81 |
| 3a | 50 | 20 | 30 | 8.3 | 2.26 |

The coercive forces are given in oersteds (Oe). One oersted equals 79.6 A/m.

Figure 2 corresponds to the hatched line area, and the vicinity of Figure 1 shown to an enlarged scale. The respective points indicated by marks ● corresponds to the composition of the respective soft magnetic thin film as measured, and are indicated by symbols 2a to 2z.

Table 1 shows the coercive forces of the single-layer film and the laminated film thereof with the $Fe_{86}Si_{14}$ thin film, in association with the respective points shown in Figure 2.

It is seen that the coercive force of the single layer film is sufficiently low (0.32 to 6.5 (Oe)), while that of the laminated film is still lower (0.14 to 1.8 (Oe)).

As a comparative example, Figure 2 shows an example of a soft magnetic thin film outside the composition range of the present invention, by a mark ▲ (point 3a). This soft magnetic thin film has a composition $Fe_{50}Co_{20}Ni_{30}$, and the coercive force of the soft magnetic thin film is 8.3 (Oe) for a single-layer film and 2.26 (Oe) for a laminated film, both of these values being much inferior to those of soft magnetic thin films within the above range.

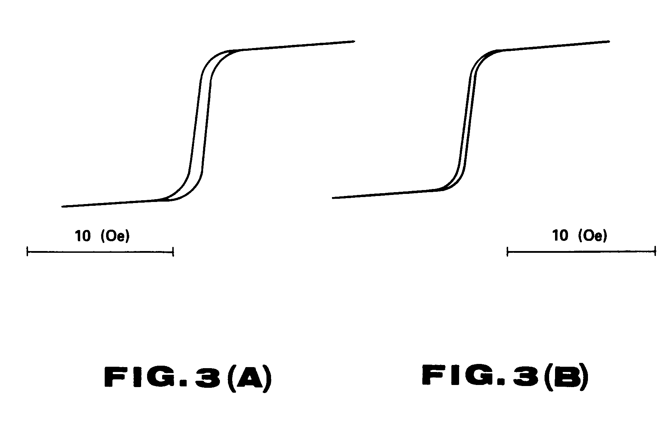

The hysteresis curves for single-layer and laminated film embodiments of soft magnetic thin films according to the present invention are shown for comparison in Figures 3(A) and 3(B), respectively. The single-layer film is 1.8 $\mu$m thick, while the laminated film is composed of 180 layers each of thin films of $Fe_{30}Co_{40}Ni_{30}$ 5.5 nm thick and $Fe_{86}Si_{14}$ 4.7 nm thick, these films being laminated alternately to a total thickness of 1.84 $\mu$m. Despite certain differences, the laminated film is similar to the soft magnetic thin film shown at point 2p in Figure 2. By comparing the single layer film and the laminated film, it is seen that the coercive force is improved in the laminated film without deteriorating the saturation magnetic flux density.

As specific examples of the soft magnetic thin film, soft magnetic thin films (I) to (VI) were prepared, and the specific electric resistance and the magnetoresistance effect were investigated. The results are shown in Table 2, wherein the soft magnetic thin films (I), (III), and (V) are single-layer films and the soft

4

magnetic thin films (II), (IV) and (VI) are laminated films obtained by laminating 180 of these single-layer films with 180 $Fe_{86}Si_{14}$ thin films alternately. The single layer films were each about 1.8 $\mu$m thick, whereas each layer of the laminated film was about 5 nm thick, the total thickness being about 1.8 $\mu$m. These two films could be compared with each other despite certain differences and correspond roughly to Figure 2. For example, the soft magnetic thin films (I), (II) are similar to point 2a in Figure 2, the soft magnetic thin films (III) and (IV) to point 2j in Figure 2 and the soft magnetic thin films (V), (VI) to point 2o in Figure 2.

Table 2

| soft magnetic thin film | composition (thickness) | | total thickness ($\mu$m) | specific electric resistance $\rho_0$ ($\mu\Omega$cm) | magneto-resistance effect $\Delta\rho/\rho_0$ (%) | coercive force (Oe) |
|---|---|---|---|---|---|---|
| | FeCoNi (Å) | FeSi (Å) | | | | |
| I | $Fe_{30}Co_{20}Ni_{50}(50)$ | $Fe_{86}Si_{14}(48)$ | 1.77 | 58.9 | 0.71 | 0.15 |
| II | $Fe_{30}Co_{20}Ni_{50}$ | — | 1.79 | 26.2 | 1.74 | 0.30 |
| III | $Fe_{20}Co_{40}Ni_{40}(54)$ | $Fe_{86}Si_{14}(47)$ | 1.81 | 52.1 | 0.93 | 0.18 |
| IV | $Fe_{20}Co_{40}Ni_{40}$ | — | 1.95 | 22.3 | 2.33 | 0.54 |
| V | $Fe_{35}Co_{35}Ni_{30}(54)$ | $Fe_{86}Si_{14}(45)$ | 1.79 | 55.7 | 0.71 | 0.17 |
| VI | $Fe_{35}Co_{35}Ni_{30}$ | — | 1.96 | 26.9 | 1.58 | 0.33 |

One Å equals 0.1 nm.

It is seen from this Table that the corresponding laminated film has a specific resistance twice as high as the single layer film, and an advantage is derived as to the core loss. It is also seen that a sufficiently low coercive force is attained in the single-layer film, but further improvement is realized in the laminated film.

The crystallographic properties of the FeCoNi base thin film, FeSi base thin film and the laminated films of these films were investigated. Using variable film thicknesses of the $Fe_{30}Co_{40}Ni_{30}$ and $Fe_{86}Si_{14}$, single-layer films and laminated films of substantially the same total thickness were prepared, and subjected to X-ray crystal diffraction after sputtering, and after annealing for one hour at 350 °C. The results are shown in Table 3.

Table 3

| | Fe$_{86}$Si$_{14}$ single-layer film 1.7 μm | | | Fe$_{30}$Co$_{40}$Ni$_{30}$(66Å) Fe$_{86}$Si$_{14}$(22Å) 200 layers each total thickness 1.76 μm | | | Fe$_{30}$Co$_{40}$Ni$_{30}$(47Å) Fe$_{86}$Si$_{14}$(54Å) 180 layers each total thickness 1.82 μm | | | Fe$_{30}$Co$_{40}$Ni$_{30}$(19Å) Fe$_{86}$Si$_{14}$(76Å) 200 layers each total thickness 1.90 μm | | | Fe$_{30}$Co$_{40}$Ni$_{30}$ single-layer film 1.9 μm | | |
|---|---|---|---|---|---|---|---|---|---|---|---|---|---|---|---|
| | hkl | 2θ | I | hkl | 2θ | I | hkl | 2θ | I | hkl | 2θ | I | hkl | 2θ | I |
| after sputtering | * - | 25.5 | 17 | F*100 | 17.0 | 21 | F*100 | 17.0 | 20 | F 111 | 51.8 | 160 | F 111 | 51.7 | 204 |
| | B 110 | 52.3 | 606 | F*110 | 25.8 | 53 | F*110 | 25.8 | 5 | F 200 | 59.8 | 24 | F 200 | 60.7 | 45 |
| | B 211 | 99.8 | 14 | B 110 | 52.5 | 8700 | B 110 | 52.3 | 840 | F 220 | 91.0 | trace | F 220 | 90.7 | 27 |
| | | | | | | | | | | | | | F 311 | 113.3 | 24 |
| after annealing | B 110 | 52.6 | 920 | F*100 | 17.1 | 24 | F*100 | 17.1 | 22 | F 111 | 51.6 | 240 | F 111 | 51.6 | 284 |
| | B 211 | 100.3 | 18 | F*110 | 25.7 | 60 | F*110 | 25.7 | 40 | B 110 | 52.6 | 192 | F 200 | 60.5 | 63 |
| | | | | B 110 | 52.5 | 12400 | B 110 | 52.4 | 3280 | F 200 | 59.9 | 29 | F 220 | 90.6 | 35 |
| | | | | B 211 | 100.5 | 9 | | | | B 200 | 77.6 | 23 | F 311 | 113.1 | 28 |
| | | | | | | | | | | B 211 | 100.2 | 19 | | | |

In this Table, hkl denotes crystal surface indices, 2θ the diffraction angle, and I the relative strength. Of the symbols in the columns of the crystal surface indices, F denotes the face-centred cubic structure, B the body-centred cubit structure, and * the ordered lattice. The total thicknesses of the single-layer film or the laminated film, and the component film thickness and the number of layers in the case of the laminated films, are as shown in this Table. It is seen from this Table that the Fe$_{86}$Si$_{14}$ single layer film has a body-centred cubic structure, while the Fe$_{30}$Co$_{40}$Ni$_{30}$ has a face-centred cubic structure, and the laminated film contains both of these structures, with one of the crystal structures dominating according to the film thicknesses of the respective layers. This tendency becomes more pronounced after annealing than after sputtering.

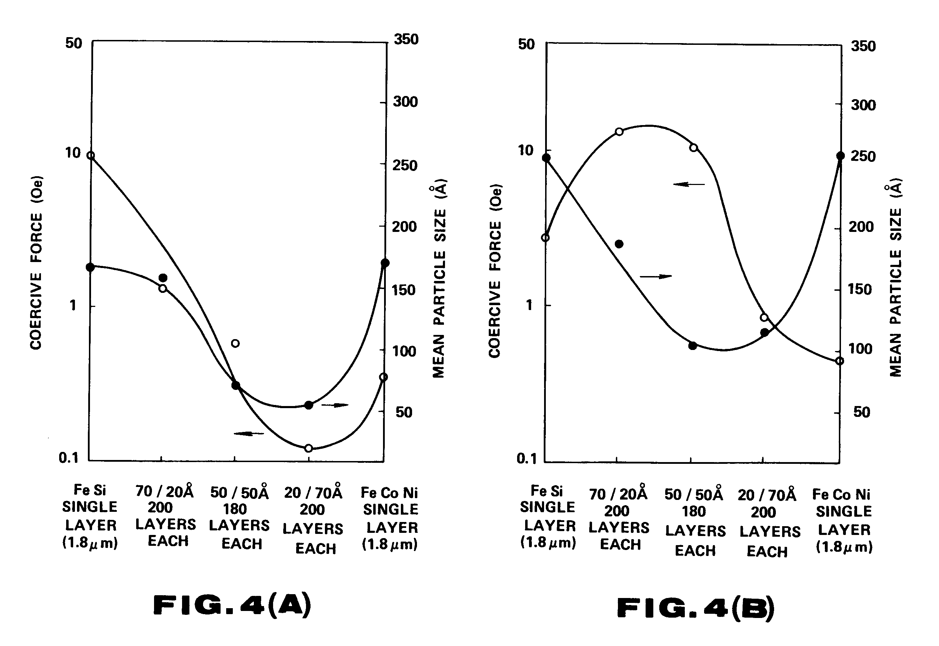

The phenomenon that the crystal structure is changed by such annealing is also seen from the mean particle size data shown in Figures 4(A) and 4(B). These figures show the mean particle size (symbol ●) of the single-layer film and the laminated film having the same composition as above, and the approximate film thickness and the coercive force (symbol o), Figure 4(A) showing the properties after sputtering and Figure 4(B) those after annealing.

Referring first to Figure 4(A), both the mean particle size and the coercive force tend to be changed so as to exhibit minimum values in dependence upon the combination of the film thicknesses. It is the soft magnetic thin film obtained upon laminating the $Fe_{86}Si_{14}$ film of 2 nm and $Fe_{30}Co_{40}Ni_{30}$ of 7 nm that exhibits the minimum coercive force after sputtering, this soft magnetic thin film also having the smallest mean particle size.

Referring to Figure 4(B), the mean particle size is increased after annealing as it is with the tendency to exhibit the minimum value in dependence upon the combination of film thicknesses, while the coercive force tends to be changed to have a maximum value.

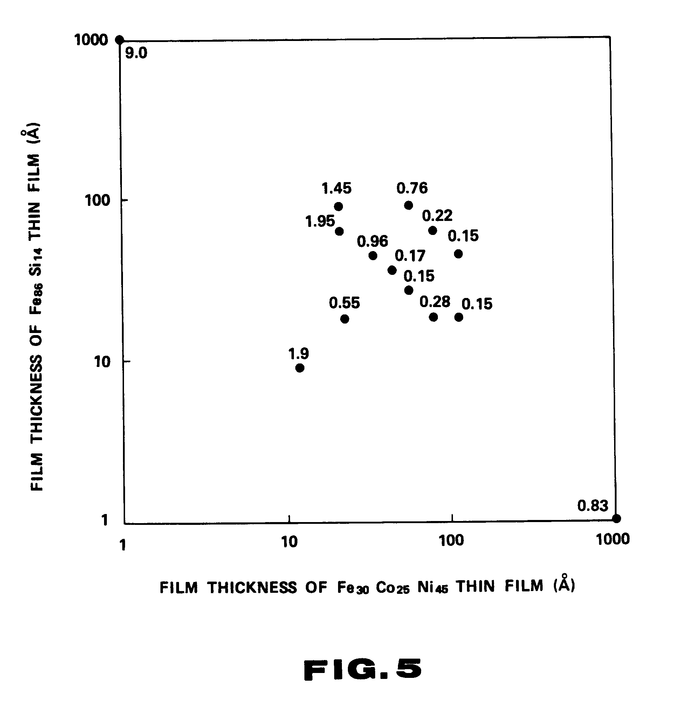

The relation between the coercive force and the combination of film thicknesses of various layers of the laminated film was then examined. Thus the $F_{30}Co_{25}Ni_{45}$ thin film and the $Fe_{86}Si_{14}$ thin film were laminated while the various film thickness combination were used, and the coercive force was measured after the end of sputtering. Figure 5 shows the film thickness combinations. The measured values of the coercive force are indicated above the respective points in the drawing. During sputtering, the gas pressure was 2.5 mTorr (one Torr equals 133.3 pascal) and the total thickness was 1.8 $\mu$m.

It is seen from this figure that the soft magnetic thin films produced all had low coercive force and that generally the soft magnetic thin film with a larger film thickness of $Fe_{30}Co_{25}Ni_{45}$ tends to have a lower coercive force than the $Fe_{86}Si_{14}$ thin film.

The above explanation relates to experiments on an FeCoNi single thin film and a laminated film thereof with an FeSi thin film. A laminated film with other than an FeSi thin film has also been examined.

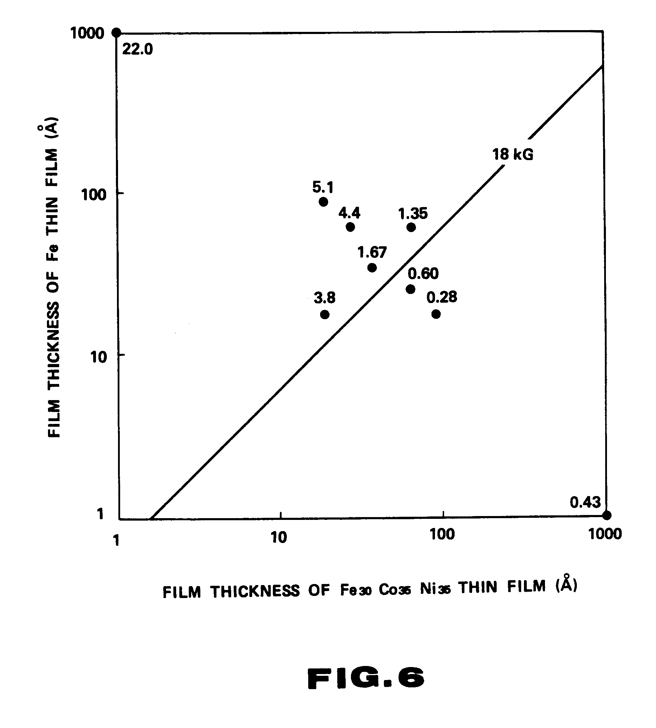

First of all, the $Fe_{30}Co_{35}Ni_{35}$ thin film was laminated with Fe thin film with various film thickness combinations, and the coercive force was measured after sputtering. These film thickness combinations are shown in Figure 6, wherein the measured values of the coercive force are entered above the respective points. During sputtering, the gas pressure was 2.5 mTorr and the total thickness was 1.8 $\mu$m.

It is seen from this figure that the soft magnetic thin film with a larger film thickness of $Fe_{30}Co_{25}Ni_{45}$ tends to show a lower coercive force than in the Fe thin film, but the coercive force is generally higher than in the soft magnetic thin film in Figure 5.

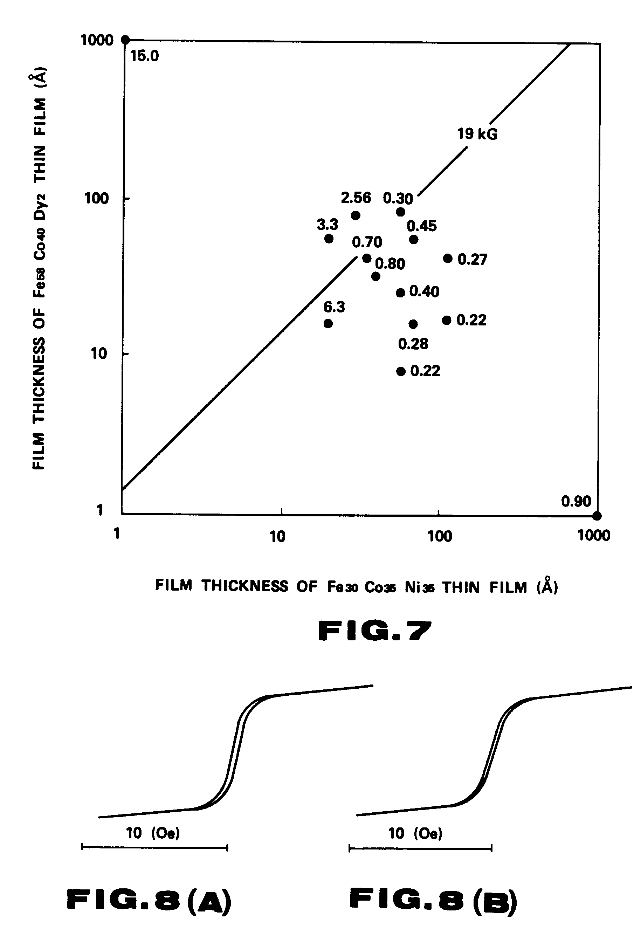

Secondly, an example of laminating a thin film of $Fe_{58}Co_{40}Dy_2$ with a thin film of $Fe_{30}Co_{35}Ni_{35}$ is considered. The laminated films were produced using variable combinations of the film thicknesses, and the coercive force was measured after sputtering. The film thickness combinations are shown in Figure 7, wherein the measured values of the coercive force are entered on points in the figure. The gas pressure during sputtering was 2.5 mTorr and the total laminated thickness was 1.8 $\mu$m.

It is seen from this figure that the soft magnetic thin film with larger film thickness of $Fe_{30}Co_{35}Ni_{35}$ thin film generally has a coercive force lower than that of the $Fe_{58}Co_{40}Dy_2$ thin film and, in general, has a coercive force intermediate between that of the soft magnetic thin film of Figure 5 and that of the soft magnetic thin film of Figure 6.

In the above examples, additional elements are not contained in the FeCoNi thin film. An example of investigating the magnetic properties of a laminated film employing the FeCoNi thin film admixed with B and Ti as the fourth element will now be explained.

In Figure 8(A), there is shown a hysteresis curve after sputtering of a laminated type soft magnetic thin film obtained upon alternately laminating 180 layers of Fe29Co40Ni29B2 thin film 5.5 nm thick and Fe86Si14 thin film 4.5nm thick, the total thickness being 1.8 $\mu$m, while in Figure 8(B), there is shown a hysteresis curve after sputtering of a laminated type soft magnetic thin film obtained upon alternately laminating 180 layers of Fe29Co40Ni29Ti2 thin film 4.3 nm thick and Fe86Ni14 thin film 4.7 nm thick, with the total thickness being 1.8$\mu$m.

It is seen from these figures that each of these laminated films has a sufficiently low coercive force, and in particular the addition of Ti is effective to reduce the coercive force, but on comparing with Figure 3(B), the saturation magnetic flux density is decreased in each case.

**Claims**

1. A soft magnetic thin film having a multilayered structure of alternately superposed first and second magnetic thin films, wherein the first magnetic thin film has a face centered cubic structure and has a composition represented by the formula:

$$Fe_aCo_bNi_cM_d$$

wherein a, b, c and d represent the atomic percentages of the elements and

$20 \leqq a \leqq 40$
$15 \leqq b \leqq 55$
$20 \leqq c \leqq 55$
$0 \leqq d \leqq 5$
$a + b + c + d = 100$

and M is at least one element selected from the group consisting of Ti, Zr, V, Nb, Ta, Cr, Mo, W, B, C, Si, A1, Ge, Ga and the second magnetic thin film has a body centered cubic structure.

2. A soft magnetic thin film according to claim 1, wherein the second soft magnetic thin film is a FeSi alloy thin film.

**Patentansprüche**

1. Weichmagnetischer Dünnfilm mit einem mehrschichtigen Aufbau aus alternierend übereinander angeordneten ersten und zweiten magnetischen Dünnfilmen, wobei der erste magnetische Dünnfilm von kubisch-flächenzentrierter Struktur ist und eine Zusammensetzung entsprechend der Formel

$$Fe_aCo_bNi_cM_d$$

aufweist, in der a, b, c und d die atomprozentualen Anteile der Elemente mit

$20 < a < 40,$
$15 < b < 55,$
$20 < c < 55$ und
$0 < d < 5$
bei $a + b + c + d = 100$

bedeuten und M wenigstens ein aus der Gruppe von Ti, Zr, V, Nb, Ta, Cr, Mo, W, B, C, Si, Al, Ge und Ga ausgewähltes Element ist,
und der zweite magnetische Dünnfilm von kubisch-raumzentrierter Struktur ist.

2. Weichmagnetischer Dünnfilm gemäß Anspruch 1, wobei der zweite weichmagnetische Dünnfilm ein Dünnfilm aus einer FeSi-Legierung ist.

**Revendications**

1. Film mince magnétique doux comportant une structure multicouche constituée par des premier et second films minces magnétiques superposés en alternance, dans lequel le premier film mince magnétique comporte une structure cubique à faces centrées et présente une composition représentée par la formule :

$$Fe_aCo_bNi_cM_d$$

où a, b, c et d représentent les pourcentages atomiques des éléments et

$20 \leq a \leq 40$
$15 \leq b \leq 55$

$20 \leq c \leq 55$
$0 \leq d \leq 5$
$a + b + c + d = 100$

et M est au moins un élément pris parmi le groupe comprenant le Ti, le Zr, le V, le Nb, le Ta, le Cr, le Mo, le W, le B, le C, le Si, l'Al, le Ge, le Ga et le second film mince magnétique présente une structure cubique centrée.

2. Film mince magnétique doux selon la revendication 1, dans lequel le second film mince magnétique doux est un film mince en alliage FeSi.

**FIG.1**

FIG.2

EP 0 297 776 B1

10 (Oe)

10 (Oe)

# FIG. 3 (A)

# FIG. 3 (B)

FIG.4(B)

FIG.4(A)

**FIG. 5**

**FIG.6**

FILM THICKNESS OF Fe₃₀ Co₃₅ Ni₃₅ THIN FILM (Å)

**FIG.7**

**FIG.8 (A)**

**FIG.8 (B)**

**FIG. 9(A)**

100 (Oe)

**FIG. 9(B)**

100 (Oe)